# EUROPEAN PATENT APPLICATION

(11) **EP 3 051 120 A1**
(43) Date of publication of application: **03.08.2016**
(21) Application number: 13894597.7
(22) Date of filing: 18.12.2013
(51) Int. Cl.: F03B 3/18

(54) **HYDRAULIC POWER GENERATION DEVICE**

(30) Priority: 24.09.2013 JP 2013196708
(71) Applicant: Kanai, Masao, Yokohama-shi Kanagawa 232-0074 (JP)
(72) Inventor: Kanai, Masao, Yokohama-shi Kanagawa 232-0074 (JP)
(74) Representative: Scholz, Volker
(86) International application number: PCT/JP2013/083946
(87) International publication number: WO 2015/045193

(57) **Abstract**

Provided is a hydraulic power generation device that efficiently converts the potential energy of the dropping water into electric energy with an increased power generation efficiency, and yet can minimize the installation space, the configuration thereof being simplified with the cost being reduced. A driven water wheel (21) is mounted to a rotary shaft (20) disposed along the center line in a cylindrical space, and by the water flow dropped in the cylindrical space, the driven water wheel (21) is rotated. The driven water wheel (21) includes a plurality of water flow blades (24) that extend obliquely upward on the same side as the rotational direction side of the driven water wheel (21) along the inner circumferential surface (12) of the cylindrical space. Between the introducing part (13) and the driven water wheel (21), there are provided flow straightening means (30) that transforms the water flow dropped from the introducing part (13) into a linear water flow that is impinged on the inclined surface on the front side of the water flow blade (24) in the driven water wheel (21) at a definite angle with respect to the inclined surface.

## Description

### Technical Field

The present invention relates to a hydraulic power generation device in which a driven water wheel is rotated by a water flow dropped in a cylindrical space, and that provides electric power from a generator connected to a rotary shaft rotated with the driven water wheel.

### Background Art

Conventionally, according to the conditions of the installation location, the application, the scale, and the like, various types of hydraulic power generation devices have been proposed. Any of such hydraulic power generation devices utilizes the potential energy of water dropping from a higher place to a lower one to rotate a water wheel, and use the rotating force thereof as a driving source for a generator to generate power generation. Particularly in the recent years, the hydraulic power generation devices have increasingly attracted public attention as clean power generation devices utilizing natural energy.

With this type of hydraulic power generation device, specifically, for example, water wheels have been installed in the middle of a water way running in a sloping ground or a flowing water passage that utilizes a river, having been set such that a water flow is butted against the water wheel at a part lower than the center thereof to transmit the rotating force of the water wheel to a generator. Thus, the type of hydraulic power generation device that converts the rotating force of a water wheel, i.e., the mechanical energy into electric energy with a generator is well known (for example, refer to Patent Document 1).

### Citation List

### Patent Literature

Patent Document 1: Japanese Patent Application Laid-open No. 2013-15089

### Disclosure of the Invention

### Problems to be Solved by the Invention

However, with hydraulic power generation devices as described in the above-mentioned Patent Document 1, there has been presented a problem that, since the water flow impinges on the water wheel at a part of the entire circumference thereof, the percentage of the energy that can be obtained from the water flow is low, and the power generation efficiency is also low. Particularly, if the water level in the water way is low, the force applied to the water wheel becomes extremely low, and there has been the possibility that the amount of power generated that is required cannot be obtained.

In addition, as described above, with a hydraulic power generation device that utilizes a water wheel rotating around a horizontal rotary shaft in a sloping water way, there is the need for a relatively wide space to install the device, which has presented a problem that it is difficult to install the device in a place where the space is limited. Further, in order to obtain a large amount of electric power, there have been the problems to be solved that the entire scale of the device becomes large, the structure of the device becomes complicated, the cost is increased, and a wider installation space is required, resulting in the installation location being extremely limited.

The present invention has been made in view of the above-mentioned problems that have been presented with the conventional technology, and it is an object of the present invention to provide a hydraulic power generation device that efficiently converts the potential energy of the dropping water into electric energy with an increased power generation efficiency, and yet can minimize the installation space, the configuration thereof being simplified with the cost being reduced.

The subject matters of the present invention to achieve the above object are disclosed in the following respective aspects of the present invention:
[1] A hydraulic power generation device, including a driven water wheel that, in a cylindrical space in which water is received from above and dropped downward, is mounted to a rotary shaft disposed along a center line extending in a vertical direction in the cylindrical space, the driven water wheel being rotated by a water flow dropped in the cylindrical space, and electric power being obtained from a generator that is connected to a rotary shaft rotated with the driven water wheel,
   the driven water wheel including a plurality of water flow blades that, on the distal end side of an arm extending from the rotary shaft, are arranged in a circumferential direction around the rotary shaft at intervals, and extend obliquely upward on the same side as the rotational direction side of the driven water wheel along an inner circumferential surface of the cylindrical space that is separate from the rotary shaft,
   the driven water wheel being disposed by one on the rotary shaft in the cylindrical space,
   an introducing part being provided above the driven water wheel in the cylindrical space, the introducing part causing the water flowing in from the outside to be dropped over the entire periphery in an area along the inner circumferential surface that is separate from the rotary shaft in the cylindrical space, and
   there being provided flow straightening means that transforms the water flow dropped from the introducing part along the inner circumferential surface of the cylindrical space between the introducing part and the driven water wheel into a linear water flow that is impinged on the inclined surface on the front side of the water flow blade in the driven water wheel at a definite angle with respect to the inclined surface.
[2] The hydraulic power generation device according to claim 1, wherein the flow straightening means is formed of a narrow width plate-like member that extends linearly in a vertical direction or being bent in the middle along the inner circumferential surface, and is fixed, being protruded from the inner circumferential surface of the cylindrical space,
   the same number of flow straightening means as that of water flow blades in the driven water wheel being arranged at regular intervals in a circumferential direction.
[3] The hydraulic power generation device according to claim 1, wherein the introducing part includes an overflow part that receives the water flowing into the cylindrical space along the center line thereof, and then causes it to overflow over the entire periphery, and a slope part in the shape of a truncated cone that causes the water overflowing from the overflow part as a top part to flow obliquely downward over the entire periphery and then to be dropped along the inner circumferential surface of the cylindrical space.
[4] A hydraulic power generation device, including a driven water wheel that, in a cylindrical space in which water is received from above and dropped downward, is mounted to a rotary shaft disposed along a center line extending in a vertical direction in the cylindrical space, the driven water wheel being rotated by a water flow dropped in the cylindrical space, and electric power being obtained from a generator that is connected to a rotary shaft rotated with the driven water wheel,
   the driven water wheel including a plurality of water flow blades that, on the distal end side of an arm extending from the rotary shaft, are arranged in a circumferential direction around the rotary shaft at intervals, and extend obliquely upward on the same side as the rotational direction side of the driven water wheel along an inner circumferential surface of the cylindrical space that is separate from the rotary shaft,
   the driven water wheel being disposed by one on the rotary shaft in the cylindrical space,
   an introducing part being provided above the driven water wheel in the cylindrical space, the introducing part causing the water flowing in from the outside to be dropped over the entire periphery in an area along the inner circumferential surface that is separate from the rotary shaft in the cylindrical space, and
   the introducing part transforming the water flow introduced from the outside and dropped into a linear water flow that is impinged on the inclined surface on the front side of the water flow blade in the driven water wheel at a definite angle with respect to the inclined surface.

Next, the function will be explained.

According to a hydraulic power generation device (10), which is described in the above item [1], the water from the outside flows into the cylindrical space through the introducing part (13) located in the upper portion thereof. The water that has flown into the introducing part (13) is dropped over the entire periphery in an area along the inner circumferential surface (12) that is separate from the rotary shaft (20) in the cylindrical space. If this water flow impinges on the inclined face on the front side of the respective water flow blades (24) in the driven water wheel (21) from above at a definite angle, the driven water wheel 21 is provided with a rotating force, the rotational direction side thereof being the same on which the water flow blade (24) extends obliquely upward.

By providing the flow straightening means (30) along the inner circumferential surface (12) of the cylindrical space between the introducing part (13) and the driven water wheel (21), the water flow dropped from the introducing part (13) is transformed into a linear water flow (hereinafter to be referred to as a linear laminar flow) that is impinged on the inclined surface on the front side of the water flow blade (24) in the driven water wheel (21) located under the flow straightening means (30) at a definite angle with respect to the inclined surface. Thereby, it is made possible to cause the water flow from above to be impinged on the respective water flow blades (24) always at a definite angle, whereby the driven water wheel (21) can be efficiently provided with a rotational force.

With the flow straightening means (30), the form thereof is not particularly limited, and may be plate-like, trough-like, tube-like, or the like. In other words, the specific configuration of the flow straightening means (30) does not matter, provided that the flow straightening means (30) can transform the direction of flowing of the water dropped from above into a direction in which the water flow blade (24) is efficiently rotated and yet the force toward the direction of dropping after the impingement is not excessively reduced, and can transform the flow of the water dropped from above into a linear laminar flow.

Specifically, for example, it is recommended that the flow straightening means (30) be configured as described in the above item [2]. In other words, the flow straightening means (30) is formed of a narrow width plate-like member that extends linearly in a vertical direction or being bent in the middle along the inner circumferential surface (12), and is fixed, being protruded from the inner circumferential surface (12) in the cylindrical space. Such flow straightening means (30) are arranged in a circumferential direction at regular intervals by the same number as that of water flow blades (24) in the driven water wheel (21). With such a simple configuration, the above-described transformation of the direction of the water flow and straightening of the water flow into a laminar layer flow can be easily realized.

In addition, as described in the above item [3], the introducing part (13) can be configured to include an overflow part 131 that receives the water flowing into the cylindrical space along the center line thereof, and then causes it to overflow over the entire periphery, and a slope part (135) in the shape of a truncated cone that causes the water overflowing from the overflow part (131) as a top part to flow obliquely downward over the entire periphery and then to be dropped along the inner circumferential surface (12) of the cylindrical space. With such a introducing part (13), even if the water is caused to vigorously flow into the cylindrical space, the water can be dropped uniformly along the inner circumferential surface (12) without the water flow being deviated to a part of the inner circumferential surface (12).

Further, in the hydraulic power generation device (10), the introducing part (13) and the flow straightening means (30) are separately provided, however, these may be configured as an integral component. In other words, as described in the above item [4], the introducing part is adapted such that the water flow introduced from the outside is transformed into a linear water flow that is impinged on the inclined surface on the front side of the water flow blade (24) in the driven water wheel (21) at a definite angle with respect to the inclined surface. In this way, the introducing part (13) itself may be provided with a function of the flow straightening means (30).

With the hydraulic power generation device in accordance with the present invention, it becomes possible to efficiently convert the potential energy of the dropping water into electric energy with an increased power generation efficiency, and yet to minimize the installation space, the configuration thereof being simplified with the cost being reduced.

### Brief Description of the Drawings

FIG. 1 is a longitudinal sectional view showing an internal structure of a hydraulic power generation device according to an embodiment of the present invention;
FIG. 2 is a perspective view showing an internal structure of a hydraulic power generation device according to the embodiment of the present invention;
FIG. 3 is a sectional view along line A-A in FIG. 1;
FIG. 4 is a sectional view along line B-B in FIG. 1;
FIG. 5 is an explanatory drawing illustrating another example of configuration of a flow straightening means for the hydraulic power generation device according to the embodiment of the present invention;
FIG. 6 is an explanatory drawing illustrating another example of configuration of a flow straightening means for the hydraulic power generation device according to the embodiment of the present invention;
FIG. 7 is an explanatory drawing illustrating another example of configuration of a flow straightening means for the hydraulic power generation device according to the embodiment of the present invention;
FIG. 8 is an explanatory drawing illustrating another example of configuration of a flow straightening means for the hydraulic power generation device according to the embodiment of the present invention;
FIG. 9 is an explanatory drawing illustrating another example of configuration of a flow straightening means for the hydraulic power generation device according to the embodiment of the present invention;
FIG. 10 is a perspective view showing a driven water wheel for the hydraulic power generation device according to the embodiment of the present invention;
FIG. 11 is a perspective view showing another example of configuration of a driven water wheel for the hydraulic power generation device according to the embodiment of the present invention;
FIG. 12 is a perspective view showing another example of configuration of a driven water wheel for the hydraulic power generation device according to the embodiment of the present invention;
FIG. 13 is a perspective view showing another example of configuration of a driven water wheel for the hydraulic power generation device according to the embodiment of the present invention; and
FIG. 14 is an explanatory drawing illustrating the function of the flow straightening means for the hydraulic power generation device according to the embodiment of the present invention.

### Best Mode for Carrying Out the Invention

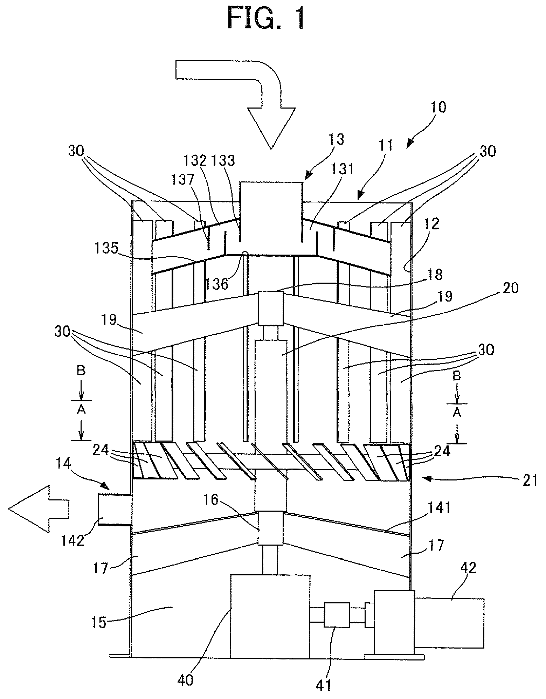

Hereinbelow, a typical embodiment of the present invention will be explained with reference to the drawings. FIG. 1 to FIG. 14 show an embodiment of the present invention. As shown in FIG. 1, a cylindrical tank 11 providing a critical portion of a hydraulic power generation device 10 is configured in a cylindrical geometry of vertical type. In the cylindrical space provided inside of this cylindrical tank 11, a rotary shaft 20 is disposed along the center line extending in a vertical direction, and a driven water wheel 21 is mounted to the rotary shaft 20.

In the upper part of the cylindrical tank 11, there is provided an introducing part 13 that causes the water flowing in from the outside to be dropped over the entire periphery along an inner circumferential surface 12 of the cylindrical space that is separate from the rotary shaft 20. On the other hand, in the lower part of the cylindrical tank 11, there is provided a discharge part 14 that causes the water dropped in the cylindrical space to flow out to the outside. In addition, under the discharge part 14, there is provided a housing part 15 that will not allow water flow to get therein, a speed increasing gear 40 connected to the lower end side of the rotary shaft 20 being disposed. The output shaft of this speed increasing gear 40 is connected to a generator 42 installed outside of the cylindrical space through, for example, a continuously variable transmission 41.

The introducing part 13 includes an overflow part 131 that receives the water flowing into the cylindrical space along the center line thereof, and then causes it to overflow over the entire periphery, and a slope part 135 in the shape of a truncated cone that causes the water overflowing from the overflow part 131 as a top part to flow obliquely downward over the entire periphery and then to be dropped along the inner circumferential surface 12 of the cylindrical space. More specifically, the overflow part 131 is formed by penetrating a water flow inlet 133 through a top part of an outside frame 132 like a cover in the shape of a truncated cone, and disposing the lower end of the water flow inlet 133 such that it faces the inside of a receiving part 136 surrounded by a flange in a top part of the slope part 135.

The slope part 135 is formed in the shape of a truncated cone that is inclined downward from the receiving part 136 toward the outer periphery side, and the outer periphery edge is disposed in a location that is separate from the inner circumferential surface 12. In addition, on the rear side of the outside frame 132 located above the slope part 135, there is provided a surrounding part 137 as a flange that is protruded downward such that it covers the upper end side of the outer periphery of the receiving part 136 in a separate manner. With the introducing part 13 having such a structure, although the details will be later described, even the water powerfully flowing in from the outside can be dropped over the entire periphery along the inner circumferential surface 12 of the cylindrical space. Needless to say, the specific configuration of the introducing part 13 is not limited to that shown in FIG. 1.

On the other hand, the discharge part 14 is formed by connecting the outer periphery edge of a bottom frame 141 in the shape of a truncated cone to the inner circumferential surface 12 of the cylindrical space, and providing a water flow outlet 142 communicating to the inside of the cylindrical space at one end of the outer periphery edge. On the lower side of a top part of the bottom frame 141, a bearing 16 on the lower end side of the rotary shaft 20 is mounted, this bearing 16 supporting the bottom frame 141 from under, and being also connected to the inner circumferential surface 12 through a frame 17 that supports the bearing 16 from the four directions. In addition, also under the introducing part 13, there is provided a bearing 18 on the upper end side of the rotary shaft 20, and this bearing 18 is connected to the inner circumferential surface 12 through a frame 19 that supports the outer periphery of the bearing 18 from the four directions.

The rotary shaft 20 is disposed in the state in which it is extended in a vertical direction along the center line in the cylindrical space of the cylindrical tank 11. This rotary shaft 20 is pivotally supported by the above-described upper and lower bearings 16 and 18. In the middle of the rotary shaft 20, one driven water wheel 21 is mounted. The lower end part of the rotary shaft 20 is extended further downward from the bearing 16, being connected to the speed increasing gear 40 so as to be capable of transmitting the power thereto. The speed increasing gear 40 can increase the number of revolutions of the rotary shaft 20 before transmitting it to the generator 42, and since the configuration of the speed increasing gear 40 is well know, the detailed description thereof will be omitted.

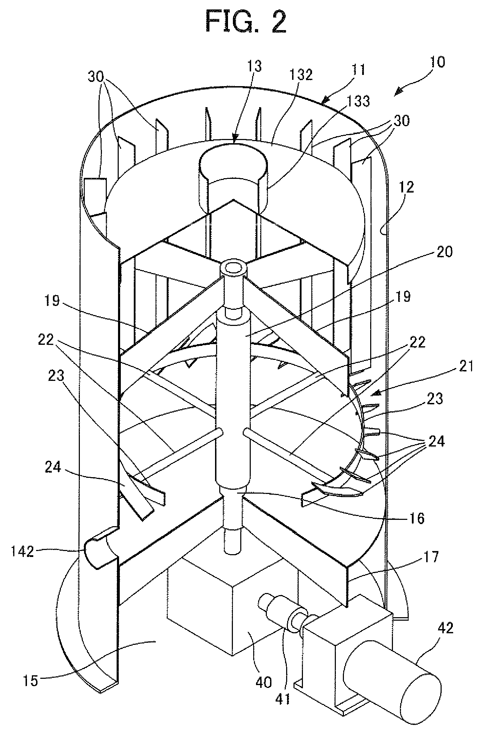

As shown in FIG. 1 and FIG. 2, the driven water wheel 21 is comprised of a wheel 23 in the shape of a ring that is supported by the distal end of an arm 22 that is connected to the rotary shaft 20 and extends in the four directions, and a plurality of water flow blades 24, 24, ......, that are mounted to the outer peripheral surface of this wheel 23 at even intervals therealong. The respective water flow blades 24 are arranged on the distal end side of the arm 22 extending from the rotary shaft 20 in a circumferential direction around the rotary shaft 20 at intervals, and extend obliquely upward on the same side as the rotational direction side along the inner circumferential surface 12 of the cylindrical space that is separate from the rotary shaft 20.

The respective water flow blades 24 are formed in the shape of a rectangular flat plate, and they are disposed with the flat front face thereof being inclined obliquely upward at a prescribed angle on the same side as the rotational direction side such that, when the water flow from above impinges on the flat front face thereof, the wheel 23 is rotated. The specific configuration of the driven water wheel 21 is not limited to that shown, and other examples of configuration will be later described.

Of the end edges on both sides of the water flow blade 24, the outside end edge that faces the inner circumferential surface 12 is disposed with a clearance large enough to allow rotation of the water flow blade 24 to be given between it and the inner circumferential surface 12. The specific dimensions, such as the length and the width, of the respective water flow blades 24, and the number of water flow blades 24 arranged in a circumferential direction are design matters that can be appropriately determined respectively.

Along the inner circumferential surface 12 of the cylindrical space between the introducing part 13 and the driven water wheel 21, there are provided flow straightening means 30. The flow straightening means 30 transforms the water flow dropped from the upper side into a linear water flow that impinges, at a definite angle, on the inclined face on the front side of the water flow blade 24 in the driven water wheel 21 located under the flow straightening means 30. The flow straightening means 30 is specifically formed of, for example, a narrow width plate-like member extending linearly in a vertical direction, being fixed with a flange (not shown) produced by bending the end edge on one side being mounted to the inner circumferential surface 12 and the end edge on the other side being protruded from the inner circumferential surface 12 toward the rotary shaft 20.

The flow straightening means 30 shown in FIG. 1 and FIG. 2 is formed in the shape of a narrow width plate extending straight in a vertical direction, being disposed such that the lower end thereof faces the inclined face on the front side of the water flow blade 24 in the driven water wheel 21 from above at a definite acute angle. The flow straightening means 30 transforms the water flow dropped from the slope part 135 mainly into a linear water flow.

Here, the water flow after having impinged on the inclined face on the front side of the water flow blade 24 to rotate the driven water wheel 21 will run obliquely downward on the side reverse to the rotational direction side of the driven water wheel 21 at the moment when it has impinged on the inclined face of the water flow blade 24, however, depending upon the rotational speed of the driven water wheel 21, it may seem as if it runs straight down from the water flow blade 24, or toward the same side as the rotational direction side.

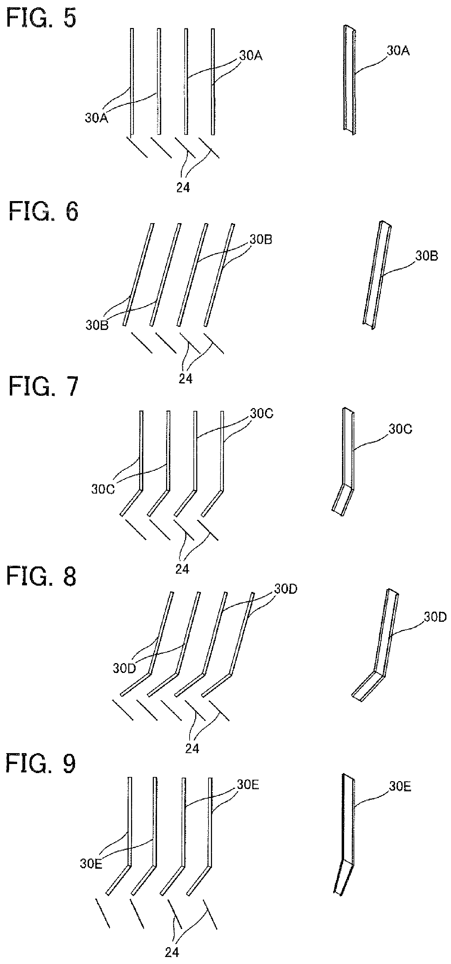

The specific geometry or location of the flow straightening means 30 is not limited to that shown. For example, with the flow straightening means 30, only the end edge thereof on one side is provided with a flange for mounting (not shown), however, as with a flow straightening means 30A shown in FIG. 5, a flange may be also provided for the end edge on the other side. Such a flange of the end edge on the other side plays a role of preventing the water dropping along the flow straightening means 30A from running sidewise beyond the end edge on the other side in the middle, holding the water until it drops from the lower end of the flow straightening means 30A.

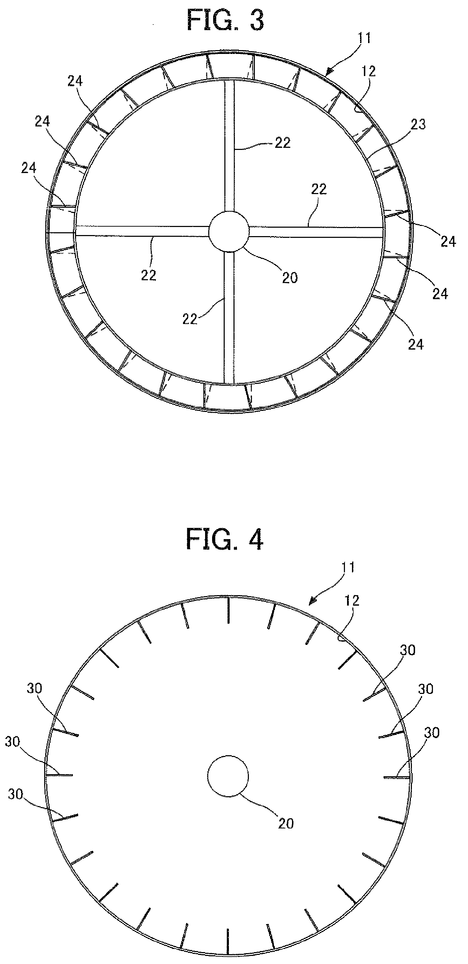

In other words, the flange of the end edge on the other side is protruded in a direction in which the water flow dropping from above obliquely downward on the side reverse to the rotational direction side is received. This is the same with flow straightening means 30B, 30C, 30D, and 30E shown in FIG. 6 to FIG. 9. In addition, as shown in FIG. 4, the flow straightening means 30 is protruded toward the rotary shaft 20 substantially at right angles from the inner circumferential surface 12 such that the side face thereof is along the radial direction.

However, the flow straightening means 30 is not always required to be protruded substantially at right angles from the inner circumferential surface 12, and, for example, it may be protruded, being inclined at an acute angle smaller than a right angle on the same side as that on which the flange on the end edge on the other side is protruded. In this case, along the corner where the end edge on one side of the flow straightening means 30 intersects with the inner circumferential surface 12 at an acute angle, the water flow tends to be easily collected by the centrifugal force, whereby the linear laminar flow can be more tightly converged. This is the same with the flow straightening means 30B, 30C, 30D, and 30E shown in FIG. 6 to FIG. 9.

In addition, the flow straightening means 30 shown in FIG. 1 and FIG. 2 are fixed to the inner circumferential surface 12 in the state in which they extend straight in a vertical direction, however, as in an example shown in FIG. 6, the flow straightening means 30B may be fixed in the state in which they obliquely extend so as to intersect with a vertical direction at an acute angle. In this case, the lower end of the flow straightening means 30B faces the inclined face on the front side of the water flow blade 24 in the driven water wheel 21 under the flow straightening means 30B such that the lower end of the flow straightening means 30B faces the inclined face at an angle slightly wider than the acute definite angle.

Further, as with the flow straightening means 30C shown in FIG. 7, the flow straightening means 30D shown in FIG. 8, and the flow straightening means 30E shown in FIG. 9, the flow straightening means 30 may be formed to be bent in the middle (for example, on the lower end side) toward the rotational direction side of the rotary shaft 20. Particularly, the bent portion on the lower end side of the flow straightening means 30E is formed such that the width thereof is gradually decreased toward the lower end, whereby the water flow is collected toward the lower end, and thus the linear laminar flow can be more tightly converged. In the case where the whole or a part of the respective flow straightening means 30B, 30C, 30D, and 30E obliquely extends so as to intersect with the vertical direction at an acute angle as shown in FIG. 6 to FIG. 9, the portion that extends obliquely is curved as if slightly twisted so as to run along the inner circumferential surface 12.

In this way, the flow straightening means 30 can have various variations, however, in any case, it is recommended that the same number of flow straightening means 30 as that of water flow blades 24 in the driven water wheel 21 be disposed so as to be arranged at equal intervals along the circumferential direction. Needless to say, it is not necessary that the number of flow straightening means 30 and that of water flow blades 24 in the driven water wheel 21 be the same, and, for example, the number of flow straightening means 30 may be larger than that of water flow blades 24, these numbers being set such that the ratio therebetween is within a prescribed range. Thus, in an example as illustrated, the number of flow straightening means 30 and that of water flow blades 24 are the same, however, these numbers are design matters that can be appropriately determined.

The generator 42, which is provided to convert the rotational energy of the rotary shaft 20 into electric energy, is connected to the rotary shaft 20 through the speed increasing gear 40 and the continuously variable transmission 41, as described above. With this generator 42, a power generation coil is mechanically rotated in a permanent magnet, an electromagnetic induction occurring at this time being used for generation of electricity, and since the configuration of the generator 42 is well known, the detailed description thereof will be omitted. In addition, the generator 42 may be disposed such that the whole or a part of the structure thereof is housed in the housing part 15 that is located at the bottom of the cylindrical tank 11. The generator 42 may be provided with, for example, a battery (not shown) so as to allow the electric energy generated to be stored.

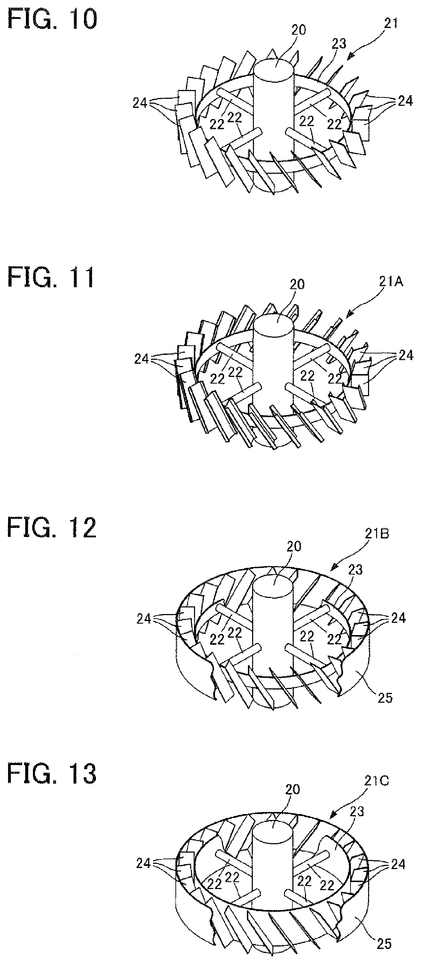

Next, another example of configuration of the driven water wheel 21 will be explained. FIG. 10 is a perspective view to show the driven water wheel 21, while FIG. 11 is a perspective view to show a driven water wheel 21A, which is a variation of the driven water wheel 21. With the driven water wheel 21A, the end edges on both sides of the water flow blade 24 are bent in the same direction, respectively, to provide a flange. This flange is bent upward to receive water, playing a role of preventing the water dropped on the water flow blade 24 from running beyond the end edge on the both sides.

With the driven water wheel 21B shown in FIG. 12, along the outside end edge of the respective water flow blades 24 in the driven water wheel 21, an outside wheel 25 in the shape of a ring that is wider than an inside wheel 23 is fixedly provided. With such outside wheel 25, the water dropped from above can be positively received with high efficiency for rotation. In addition, as with a driven water wheel 21C shown in FIG. 13, the height or width of the inside wheel 23 may be the same as that of the outside wheel 25.

Next, the function of the hydraulic power generation device 10 according to the present embodiment will be explained. The water that is used with the hydraulic power generation device 10 may be introduced from a natural river, fall, or the like, however, it may be a fixed quantity of water that is previously preserved and circularly used. In any case, the water from the outside is caused to flow into the cylindrical space from the introducing part 13, which is in the uppermost part of the cylindrical tank 11. The water flows in from the water flow inlet 133 provided in the introducing part 13, however, at this time, a swirling flow may be produced by, for example, injecting the water from a nozzle. The water flow from this water flow inlet 133 is received by the receiving part 136 in FIG. 1, and then, overflows in between the outer periphery on the lower end side of the water flow inlet 133 and the inner periphery on the upper end side of the receiving part 136.

The water flow that has overflown in the introducing part 13 further flows down in between the outer periphery on the upper end side of the receiving part 136 and the inner periphery on the lower end side of the surrounding part 137. Through such a process, the water flow is uniformly distributed over the entire periphery through 360 deg. in a plan view, being directed obliquely downward without being horizontally spread, and flows down along the outer peripheral surface of the slope part 135. Thereby, the water that has flown into the introducing part 13 from the outside can be dropped from the upper end of the cylindrical space in the cylindrical tank 11 over the entire periphery in the area along the inner circumferential surface 12 that is separate from the rotary shaft 20. In the case where a fixed quantity of water is used in a circulated manner, an electric pump that can adjust the rate of the water supplied is run to supply the water to the water flow inlet 133, however, as the electric power at this time, a part of the electric power generated by the present hydraulic power generation device 10 may be used as it is.

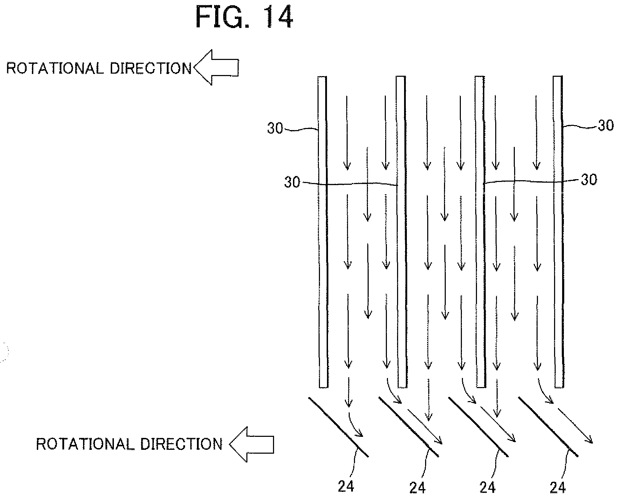

The water flow that has been passed through the introducing part 13 is dropped along the inner circumferential surface 12 of the cylindrical tank 11, however, it is transformed into a linear laminar flow by the flow straightening means 30 provided on the lower side of the introducing part 13. In this way, the water that is to be impinged on the driven water wheel 21 is positively transformed into a linear laminar flow without depending only on the function of the introducing part 13 itself or the force of gravitation. As shown in FIG. 14, this linear laminar flow is impinged on the inclined face on the front side of the respective water flow blades 24 in the driven water wheel 21 from above at a definite acute angle. Thereby, the driven water wheel 21 is provided with a rotating force, the rotational direction side thereof being the same on which the water flow blade (24) extends obliquely upward. In other words, the rotary shaft 20 is rotated in a clockwise direction when viewed from above in FIG. 2.

Here, the definite acute angle refers to an angle at which the linear laminar flow impinges on the inclined face on the front side of the respective water flow blades 24, allowing the water flow blade 24 to be efficiently rotated. For example, in the case where the inclined face on the front side of the water flow blade 24 has an inclination angle of 60 deg. with respect to the horizontal direction, an appropriate angle at which the linear laminar flow impinges on this inclined face is 45 deg. Needless to say, the inclination angle of the water flow blade 24 and the angle at which the linear laminar flow impinges on the inclined face of the water flow blade 24 are design matters that can be appropriately determined, however, various experiments conducted by the inventor, et al. have verified that an appropriate inclination angle of the inclined face of the water flow blade 24 is in the range of, for example, 45 to 60 deg., while an appropriate angle at which the linear laminar flow impinges on the inclined face of the water flow blade 24 is in the range of, for example, 30 to 60 deg.

Particularly, the same number of flow straightening means 30 as that of the number of water flow blades 24 in the driven water wheel 21 are disposed so as to be arranged at regular intervals in a circumferential direction. Therefore, the water flow dropped from the introducing part 13 is straightened in the course of falling between respective flow straightening means 30, being distributed as a linear water flow that is directed downward from above for all the water flow blades 24, and the linear water flow impinges on the respective water flow blades 24 at the definite acute angle that provides a good rotation efficiency. The flow straightening means 30 having such a simple configuration allows the driven water wheel 21 to be efficiently rotated even with a small quantity of water.

The rotation of the driven water wheel 21 causes the rotary shaft 20 to be rotated, and the number of revolutions is increased by the speed increasing gear 40 provided in the housing part 15 of the cylindrical tank 11. Further, the continuously variable transmission 41 transforms the increased number of revolutions into a number of revolutions that is appropriate for driving the generator 42. Thereby, the rotational energy of the rotary shaft 20 is converted into electric energy, however, the electric power generated may be stored in a battery or used as a power source for the above-mentioned electric pump. The water that has been dropped to the lowermost portion of the cylindrical tank 11 is discharged to the outside from the water flow outlet 142 in the discharge part 14. The water that has been discharged may be fed to the water flow inlet 133 in the introducing part 13 back by driving the electric pump for circulation.

Thus, the present hydraulic power generation device 10 has a relatively simple configuration, and can be manufactured inexpensively. In addition, the cylindrical tank 11, which is a critical part, is of vertical type, extending in a vertical direction, and thus if a space corresponding to the bottom area of the cylindrical tank 11 is available, the present hydraulic power generation device 10 can be installed, whereby it can be installed in various locations, such as the roof of a building or an outdoor place. In addition, the present invention is applicable to cylindrical tanks of various sizes from a small scale cylindrical tank, having a height of a few meters, to a large scale one.

Heretofore, the embodiment of the present invention has been described with reference to the drawings, however, the specific configuration is not limited to that of the above-described embodiment, and changes and modifications may be included in the present invention, so long as they do not depart from the spirit and scope thereof. For example, the geometry of the water flow blade 24, the number of water flow blades 24, the angle thereof, and the like, can be appropriately altered. In addition, the configuration of the introducing part 13 is not limited to that shown in the figure, and any configuration thereof may be adopted, provided that it allows the water flowing in from the outside to be dropped over the entire periphery along the inner circumferential surface 12 of the cylindrical space. Here, the water being dropped over the entire periphery means not only the water being dropped over the entire angle of 360 deg., but includes a meaning of the water being dropped such that the flows of water are arranged at predetermined intervals over the entire periphery.

In addition, the geometry of the flow straightening means 30, the number of flow straightening means 30, the angle thereof, and the like, can be appropriately altered. For example, a part on the lower end side of the flow straightening means 30 may be narrowed down in the shape of a nozzle such that the flow rate of the dropping water is accelerated. In addition, the configuration of the flow straightening means 30 is not limited to that in the shape of a flat plate or a trough, and by using a pipe material, or the like, the flow straightening means 30 may be configured to have a tubular section. In addition, the water flow outlet 142 in the discharge part 14 may be provided to be directed downward so as to be passed through the housing part 15, rather than to be directed to the outside from the outer periphery edge of the bottom frame 141. In this case, the water flow outlet 142 is protruded to the outside from an appropriate place in the housing part 15.

In addition, in the above embodiment, the introducing part 13 and the flow straightening means 30 are separately provided, however, these may be configured as an integral component. In other words, the introducing part is configured such that the water flow introduced from the outside is transformed into a linear water flow that is impinged on the inclined surface on the front side of the water flow blade 24 in the driven water wheel 21 at a definite angle with respect to the inclined surface. Specifically, for example, a hopper or a receiving part in the shape of a tank that once receives the water flow introduced from the outside is provided on the upper end side of the cylindrical space (concentrically with the rotary shaft 20), and to this receiving part, pipes extending to the respective water flow blades 24 to distribute the water are connected. It is recommended that the lower end outlet of the respective pipes be disposed so as to face the inclined surface on the front side of the water flow blade 24 in the driven water wheel 21 at a definite angle. Thereby, the introducing part itself can be provided with a function of the flow straightening means.

Further, the mechanism for power transmission from the rotary shaft 20 to the generator 42 is not limited to the speed increasing gear 40, or the like, with which gears are engaged with each other, and for example, a pulley fixed to the lower end of the rotary shaft 20, a pulley mounted to the input shaft of the generator 42, a belt stretched between both pulleys, and the like, may be used to provide an appropriate configuration.

### Industrial Applicability

The hydraulic power generation device of the present invention is installed such that water is introduced thereinto from a natural river, a fall, or the like, and besides this, also in various types of spaces, such as a vacant lot and a dead space between multiple dwelling buildings, such as apartments in the inner city and public housings, and between general buildings, it can be widely used by utilizing various types of spaces with a definite quantity of water that has been previously secured being circulated. Needless to say, also in mountain areas, isolated islands, and other places that is inconvenient in therms of public transportation, electric power can be obtained with high efficiency.

Such a hydraulic power generation device will not be influenced by weather, as with solar power generation and wind power generation devices, which are conventional clean energy supplying devices, and is capable of realizing stable power generation, the value of industrial utility thereof being extremely high.

### Description of Symbols

Reference numeral 10 denotes a hydraulic power generation device; 11 a cylindrical tank; 12 an inner circumferential surface; 13 an introducing part; 14 a discharge part; 15 a housing part; 16 a bearing; 18 a bearing; 20 a rotary shaft; 21 a driven water wheel; 22 an arm; 23 a wheel; 24 a water flow blade; 25 an outside wheel; 30 a flow straightening means; 40 a speed increasing gear; 41 a continuously variable transmission; 42 a generator; 131 an overflow part; 133 a water flow inlet; 135 a slope part; 136 a receiving part; 141 a bottom frame; and 142 a water flow outlet.

## Claims

1. A hydraulic power generation device (10), comprising a driven water wheel (21) that, in a cylindrical space in which water is received from above and dropped downward, is mounted to a rotary shaft (20) disposed along a center line extending in a vertical direction in the cylindrical space, said driven water wheel (21) being rotated by a water flow dropped in said cylindrical space, and electric power being obtained from a generator (42) that is connected to a rotary shaft (20) rotated with the driven water wheel (21),
said driven water wheel (21) including a plurality of water flow blades (24) that, on the distal end side of an arm (22) extending from said rotary shaft (20), are arranged in a circumferential direction around the said rotary shaft (20) at intervals, and extend obliquely upward on the same side as the rotational direction side of said driven water wheel (21) along an inner circumferential surface (12) of said cylindrical space that is separate from the rotary shaft (20),
said driven water wheel (21) being disposed by one on said rotary shaft (20) in said cylindrical space,
an introducing part (13) being provided above said driven water wheel (21) in said cylindrical space, the introducing part (13) causing the water flowing in from the outside to be dropped over the entire periphery in an area along said inner circumferential surface (12) that is separate from said rotary shaft (20) in said cylindrical space, and
there being provided flow straightening means (30) that transforms the water flow dropped from said introducing part (13) along the inner circumferential surface (12) of said cylindrical space between said introducing part (13) and said driven water wheel (21) into a linear water flow that is impinged on the inclined surface on the front side of the water flow blade (24) in said driven water wheel (21) at a definite angle with respect to the inclined surface.

2. The hydraulic power generation device (10) according to claim 1, wherein said flow straightening means (30) is formed of a narrow width plate-like member that extends linearly in a vertical direction or being bent in the middle along the inner circumferential surface (12), and is fixed, being protruded from the inner circumferential surface (12) of said cylindrical space,
the same number of flow straightening means (30) as that of water flow blades (24) in said driven water wheel (21) being arranged at regular intervals in a circumferential direction.

3. The hydraulic power generation device (10) according to claim 1, wherein said introducing part (13) includes an overflow part (131) that receives the water flowing into the cylindrical space along the center line thereof, and then causes it to overflow over the entire periphery, and a slope part (135) in the shape of a truncated cone that causes the water overflowing from the overflow part (131) as a top part to flow obliquely downward over the entire periphery and then to be dropped along the inner circumferential surface (12) of said cylindrical space.

4. A hydraulic power generation device (10), comprising a driven water wheel (21) that, in a cylindrical space in which water is received from above and dropped downward, is mounted to a rotary shaft (20) disposed along a center line extending in a vertical direction in the cylindrical space, said driven water wheel (21) being rotated by a water flow dropped in said cylindrical space, and electric power being obtained from a generator (42) that is connected to a rotary shaft(20) rotated with the driven water wheel (21),
said driven water wheel (21) including a plurality of water flow blades (24) that, on the distal end side of an arm (22) extending from said rotary shaft (20), are arranged in a circumferential direction around the said rotary shaft (20) at intervals, and extend obliquely upward on the same side as the rotational direction side of said driven water wheel (21) along an inner circumferential surface (12) of said cylindrical space that is separate from the rotary shaft (20),
said driven water wheel (21) being disposed by one on said rotary shaft (20) in said cylindrical space,
an introducing part (13) being provided above said driven water wheel (21) in said cylindrical space, the introducing part (13) causing the water flowing in from the outside to be dropped over the entire periphery in an area along said inner circumferential surface (12) that is separate from said rotary shaft (20) in said cylindrical space, and
said introducing part (13) transforming the water flow introduced from the outside and dropped into a linear water flow that is impinged on the inclined surface on the front side of the water flow blade (24) in said driven water wheel (21) at a definite angle with respect to the inclined surface.
